# EUROPEAN PATENT SPECIFICATION

(11) **EP 0 915 250 B1**
(45) Date of publication and mention of the grant of the patent: **16.04.2003**
(21) Application number: 97308937.8
(22) Date of filing: 06.11.1997
(51) Int. Cl.: F02M 37/00, F02M 37/20, B64D 37/32

(54) **Fuel systems for avgas with broad volatility**
Brennstoffsysteme für Flugzeugbenzin mit breiter Flüchtigkeit
Systèmes de carburant pour essence d'aviation avec grande volatilité

(43) Date of publication of application: 12.05.1999
(73) Proprietor: Cessna Aircraft Company, Wichita Kansas 67201 (US)
(72) Inventor: Gonzalez, Cesar, Wichita, Kansas 67212 (US)
(74) Representative: Warren, Anthony Robert

(56) References cited:
- US-A- 2 895 463
- US-A- 4 794 889
- US-A- 5 389 245

## Description

The present invention relates to aircraft fuel systems and more specifically to systems featuring engine fuel injection means, which can handle the broad volatility characteristics of the newly proposed unleaded Grade 82UL, and traditional ASTM D910 aviation gasolines.

A variety of airplanes in the current general aviation fleet featuring low octane engines with carburetors, are operating without vapor problems on motor gasolines of broad volatility characteristics. 'Motor gasolines" include all road vehicle gasolines. ASTM D910 aviation gasolines include Grades 80-87, 100-130 and 10OLL (low lead) products. However, most fuel injected engines are not compatible with the proposed Grade 82UL fuels based on motor gasoline stocks covering a broad range of volatility characteristics, and a limited number of engines fitted with carburetors have shown similar incompatibilities in specific aircraft installations.

Some high performance aircraft fuel injected engines require 100 octane aviation gasoline to operate, and tetraethyl lead additives, which are indispensable to achieve 100 octane ratings, are no longer acceptable for environmental reasons and must be replaced with alternative unleaded fuels. One proposed alternative, is the lower octane Grade 82UL aviation gasoline based on motor gasoline stocks currently under evaluation in lower compression engines. As is the case with the motor gasolines on which it is based, the proposed Grade 82UL aviation gasoline offers a broad range of volatility characteristics, and fuels covering the high volatility end of that range have been demonstrated to be incompatible with conventional aircraft engine fuel injection and associated airframe systems. Evolution of vapor under hot ambient conditions exceeds the purging capacity of these systems, resulting in the development of vapor lock in the engine and supply system pumps.

One prior art method that provided partial relief to this problem utilized a recirculating fuel system which could pump cool fuel from the tank through the entire system, including the hot engine and engine compartment, thus purging vapors back to the tank while cooling various fuel injection system components. However, with fuels exhibiting Reid vapor pressures approximately above 58.61 Pa (8.5 PSI), this recirculated fuel could not purge vapors at rates commensurate with their evolution, and it raised the temperature of the fuel in the tanks, thus compounding the problem. Partial, but not total relief of vapor lock problems has also been provided by insulating lines within the hot engine compartment, insulating fuel injection components from the hot engine itself, and air cooling some or all of the same components. Submerged electric fuel pumps installed in the fuel tanks have been adopted on a large number of aircraft, and represent the standard solution approach on modern fuel injected automobiles. However, while very effective in solving vapor problems, this approach pressurizes the entire fuel system and due to safety considerations is not considered an acceptable solution for many aircraft types, where the fuel supply lines from the tank to the engine must traverse the pilot and passenger compartments.

Under hot ambient conditions, motor gasolines or the proposed Grade 82UL aviation gasoline have volatility characteristics more severe than traditional ASTM D-910 aviation gasolines limited by the specification to a maximum Reid vapor pressure of 51.71 Pa (7.5 PSI), and therefore the engine fuel injection and associated airframe systems for these more volatile gasolines must be capable of purging vapors which may develop and accumulate in various components in the system so that the engine does not experience partial or total power losses due to vapor lock conditions.

US-A-2,895,463, although not concerned with the problems discussed above, discloses a recirculating fuel system for an automobile or aircraft piston engine which incorporates a pressurized vapor separator of undisclosed construction connected in the fuel line between a fuel tank and a fuel metering unit associated with the engine. Fuel is pumped to the vapor separator by a submerged auxiliary pump in the fuel tank, and fuel from the vapor separator is fed to a constant delivery pump which pumps fuel under pressure to the fuel metering unit which meters the fuel to the engine manifold and returns excess fuel to the vapor separator for recirculation to the constant delivery pump. The vapor separator is connected to the fuel tank by a vapor vent line incorporating a check valve.

US-A-5,389,245 discloses a recirculating fuel system for a fuel injected marine engine, which incorporates a pressurized vapor separator having a reservoir connected in the fuel line between the fuel tank and engine injector fuel rail. Fuel is pumped from the tank to the vapor separator, and fuel is pumped under pressure by an immersed pump in the separator reservoir to the fuel rail with excess fuel being returned to the separator reservoir and recirculated. The vapor separator is connected to the engine inlet manifold by a valve and vapor vent line. The valve is only opened when the engine is shut down, or when, during sustained operation at idle speed, there is an increase in fuel pressure in the reservoir.

The present invention is directed to a fuel system generally of the basic type disclosed in US-A-5,389,254 and as defined in the preamble of claim 1.

It is an object of the present invention to provide an engine fuel system which can handle a broad volatility range of aviation gasolines, including those based on motor gasolines having a Reid vapor pressure as high as 100 Pa (14.5 PSI).

Another object of the present invention is to provide an engine and associated airframe fuel system which avoids circulating fuel flow back to the tank or tanks.

According to the invention, there is provided an aircraft having a fuel system as defined in the characterising clause of claim 1.

The engine fuel injection and associated airframe systems, or carbureted systems, embodying the invention solve the foregoing vapor problems for a broad volatility range of aviation gasolines. The vapor is removed from one or more locations in the fuel system, and the vapor handling characteristics are improved by means of an auxiliary fuel pump installed remotely from the fuel tank or tanks and the engine compartment.

The systems embodying the invention are devoid of fuel recirculation back to the tank, thus avoiding tank bulk fuel temperature rises. They reduce supply line fuel flow velocities and corresponding pressure losses, and do not require complex selector valves. The new systems only return vapor to the tank or tanks.

The submerged auxiliary fuel pump, fuel pump by-pass valve, and pressure relief valve are installed within a small vented fuel reservoir outside the engine compartment. While the auxiliary fuel pump and pump by-pass valve draw liquid fuel from the lower part of the reservoir, the vapors collected above the fuel in the top of the reservoir are vented back to the tank or tanks. Fuel vapor that develops in lines and engine fuel injection components within the engine compartment is accumulated in a pressurized vapor separator located at a relatively high level of the system downstream of the engine driven fuel pump in the engine compartment, and is vented under pressure back to the fuel tank or tanks.

One of the safety features of the fuel systems embodying the invention is that it eliminates or reduces to an absolute minimum the length of pressurized fuel lines located within the occupied cabin compartment of the aircraft. With the elimination of recirculated fuel back to the tank or tanks, these pressurized lines and the associated tank return selector valve provisions are also eliminated.

Various embodiments of the present invention will now be described with reference to the accompanying drawings, in which:-
Figure **1** is a schematic diagram of all of the components in one embodiment of the fuel system and their relative positions in the aircraft;
Figure **2** is a detailed vertical section of the vapor separator taken along line 2 -- 2 of Figure 3;
Figure **3** is a top view of the vapor separator; and
Figure **4** is a schematic diagram of a modified fuel system utilized with a carburetor.

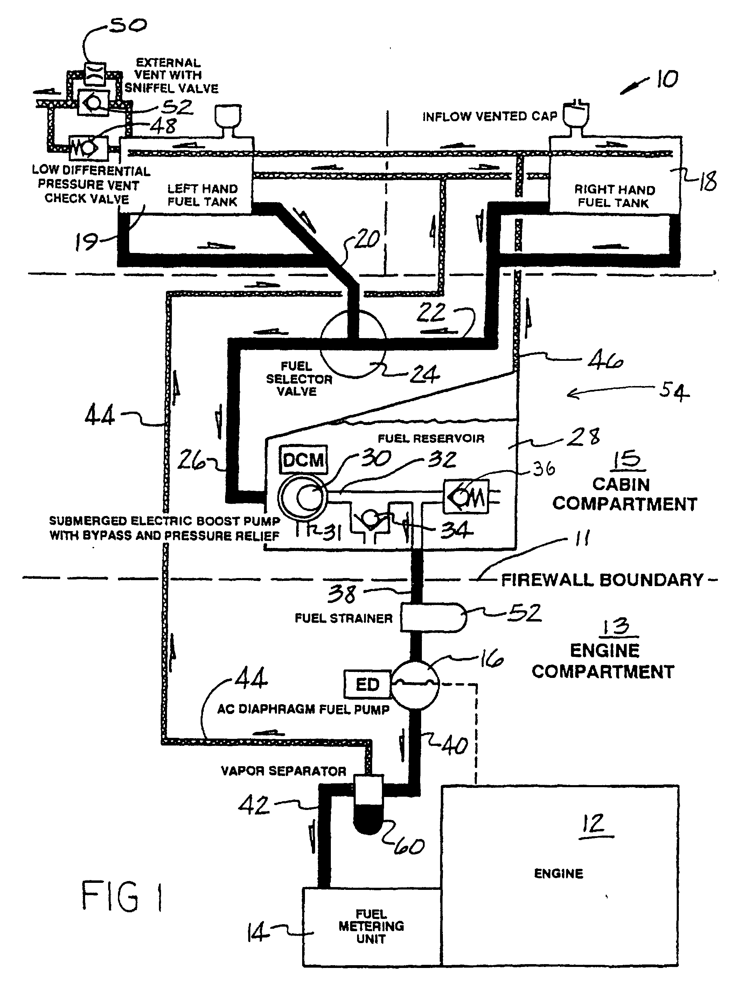

Referring to the accompanying Figure **1** wherein all of the components are represented by either functional blocks or symbols, the overall fuel system is generally identified by reference numeral **10**. The fuel system **10** supplies a piston aircraft engine **12** with fuel from portions of the system in the engine compartment **13** and the cabin compartment **15** which also includes the wings, not shown, which contain the right- and left-hand fuel tanks **18** and **19** respectively. The fuel system **10** is a fuel injection type system, as distinguished from a carbureted system, including two pumps **16** and **30** for moving the fuel through the system. The system supplies a fuel metering unit **14** which is conventional in design and is controlled by a manual throttle and mixture control (not shown).

Each of the fuel tanks **18** and **19** includes a pair of fuel lines exiting from opposite sides of the tank so that there is always fuel flow from one side or the other during rolling manoeuvres of the aircraft. The pair of fuel lines of each tank join together as a single line **20** and **22** from the left and right tanks respectively at a juncture with a conventional fuel selector value **24**, which allows fuel to flow by gravity from either the right or left tank, or both. The outlet from selector valve **24** connects with a fuel line **26** which in turn connects to a small fuel reservoir **28**, for example a reservoir which contains about 3.79 litres (a gallon), or less, of fuel. Contained within reservoir **28** is a submerged electric auxiliary pump **30** which draws fuel from the lowest part of reservoir **28** via an inlet line **31**. An outlet line **32** from auxiliary pump **30** includes a check valve **34** which permits bypass flow in the system when auxiliary pump **30** is inoperative. If required, a low pressure relief valve **36** may be positioned in outlet line **32**. The relief valve **36**, which is provided with an outlet remote from the auxiliary pump, permits auxiliary pump **30** to circulate fuel within the reservoir **28** without injecting vapor when fuel is not called for in the engine **12**. Auxiliary pump **30** is a positive displacement conventional pump, and if a centrifugal pump is substituted, relief valve **36** would not be required. The reservoir **28** and its above-described components are also referred to as an integrated module **54**. Any vapor collected in the reservoir **28** above the fuel is vented back to the tanks, **18**, **19** via a vapor vent line **46**. The reservoir **28** is located outside the engine compartment **13** in close proximity to the fire wall **11** of the engine, and the pump outlet line **32** connects with a fuel line **38** as it passes through the fire wall **11** into a conventional fuel filter or strainer **52**. Fuel line **38** continues into the inlet of an engine-driven pump **16** which maintains a constant pressure level downstream therefrom through fuel line **40**, vapor separator **60**, fuel line **42**, and into fuel metering unit **14**. Metering unit **14**, which is controlled by the throttle and mixture control of the aircraft, supplies the engine with the required fuel for various throttle and mixture control positions.

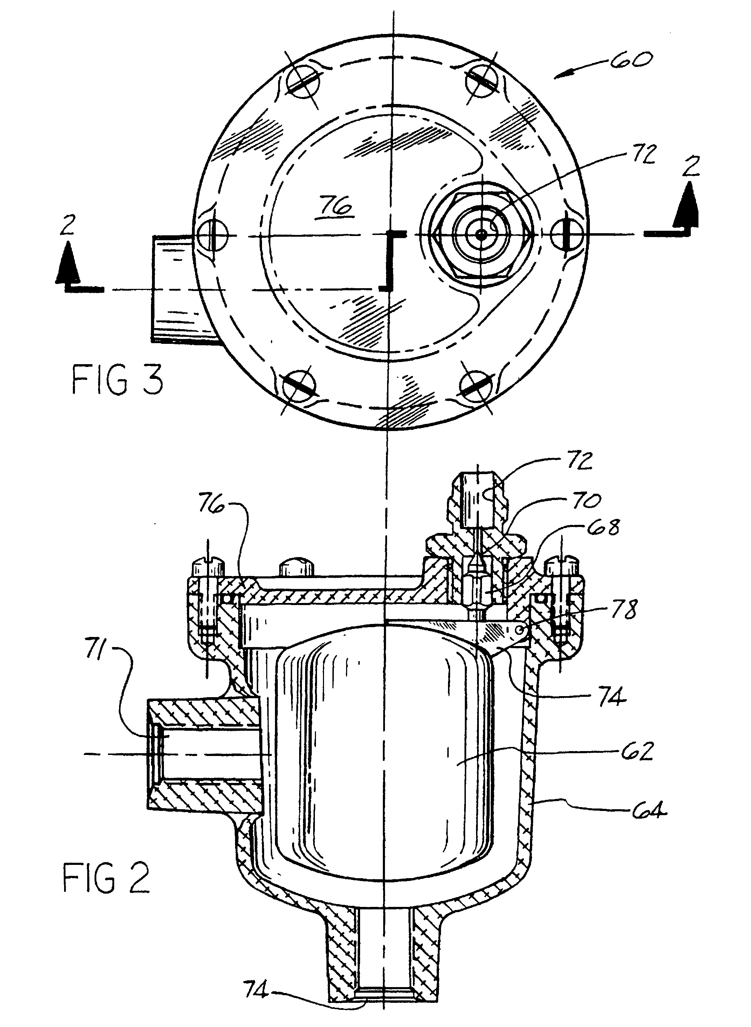

Figure **2** illustrates the vapor separator **60** in detail. Separator **60** includes a float **62** which is attached to an arm **74** and moves vertically, as seen in the drawing, to actuate a needle valve **68** which is cooperable with a valve seat **70**. The body **64** of the vapor separator is cup-shaped, and closed at one end by an end plate **76**. Fuel flows into inlet port **71** from fuel line **40** and is discharged from the separator via liquid outlet port **74** located in the bottom of the separator. Outlet port **74** is in turn connected to the fuel line **42** through which fuel flows into the fuel metering unit of the aircraft engine **14**.

If there is no vapor in vapor separator **60**, needle valve **68** is held closed by the buoyancy effect of float **62** because the separator is completely filled with fuel. Separator **60** is positioned at a point higher than the downstream fuel line **42** and fuel metering unit **14** so that any vapor can rise into port **74** and collect in the top of the separator. Once sufficient vapor has displaced enough fuel in the separator, the float will drop, opening needle valve **68** which will vent vapor through a port **72** and vapor vent line **44** back to the fuel tanks **18** and **19**. Fuel tank ullage pressure is maintained at a relatively low differential by a low pressure relief valve **48** in fuel tank **19.** Once sufficient vapor is vented through needle valve **68**, float **62** will close the valve **68** prior to the passage of pressurized liquid fuel into vent line **44**. A check valve **52** in tank **19** permits atmospheric air to enter the tanks as the fuel is being burned.

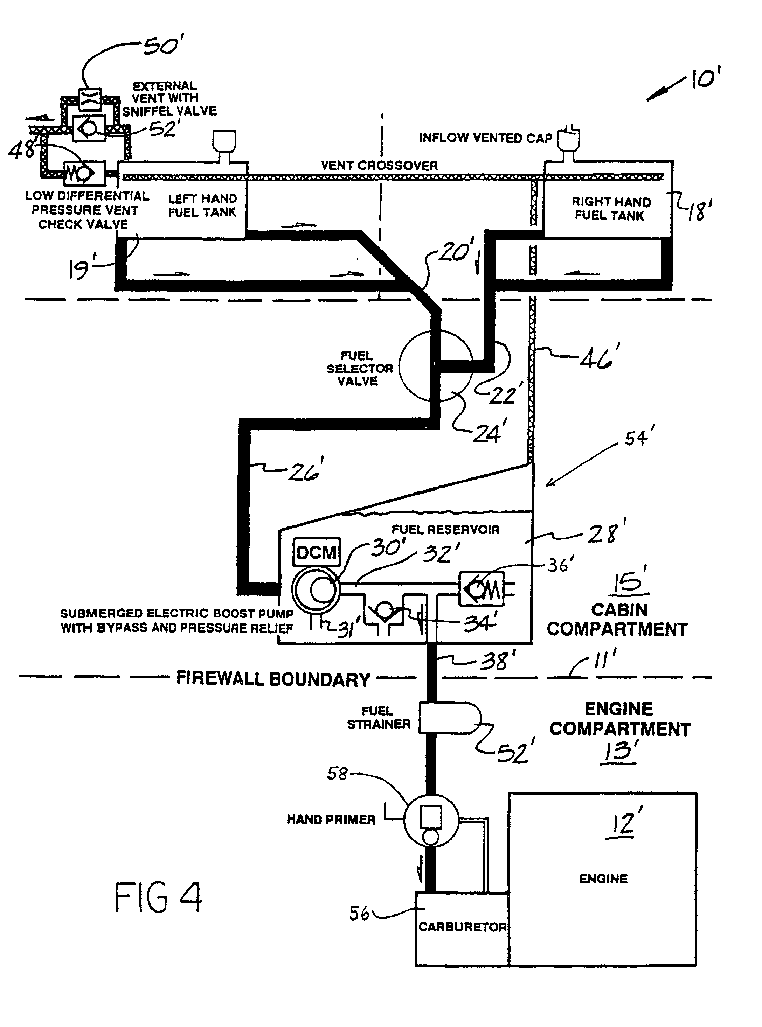

Figure **4** shows a modified fuel system for a carburetor engine which utilizes a similar integrated module **54'** to that of Figure **1**. Fuel is supplied by gravity from tanks **18'** and **19'** through a selector valve **24'** and fuel line **26'** in the same manner as described with reference to Figure **1**. Auxiliary pump **30'** can be utilized on demand to supply the engine. In hot weather conditions with the more volatile fuels, as in the Fig. **1** embodiment, the reservoir **28'** vents any vapor collected in the reservoir **28'** back to tanks **18'** and **19'** through vapor vent line **46'**. Fuel from pump outlet line **32'** connects with fuel line **38'** and flows to carburetor **56** through fuel filter or strainer **52'** and a hand primer **58**.

The above is a detailed description of the preferred embodiments. It is to be understood that various modifications may be made without departing from the scope of the present invention as defined in the appended claims. For example, the reservoir together with the auxiliary fuel pump, the fuel pump bypass valve and, optionally, the pressure relief valve, could be supplied as a unit for incorporation in an existing aircraft fuel supply system.

The vapor separator could, similarly, be supplied separately, or as a kit or in combination with the integrated or self-contained reservoir module or unit.

## Claims

1. A piston engined craft having a fuel system (**10; 10'**) including:
a fuel tank (**18, 19; 18', 19'**);
a fuel metering unit (**14; 56**) associated with the engine (**12; 12'**);
a fuel line (**26, 38, 40, 42; 26', 38'**) connecting the metering unit (**14; 56**) to the fuel tank (**18, 19; 18', 19'**); and
means in said line between the fuel tank and the metering unit for venting fuel vapor, via a vapor vent line (**46; 46'**), said fuel vapor venting means including a fuel reservoir (**28, 28'**) in said line between the fuel tank and the metering unit, and a submerged auxiliary pump (**30; 30'**) in said reservoir to charge the fuel system downstream of said reservoir; and
**characterised in that**:
the craft is an aircraft;
the fuel tank (**18, 19; 18', 19'**) is a gravity flow fuel tank in the aircraft, which gravity-feeds fuel to the reservoir (**28; 28'**) via the fuel line (**26; 26'**);
an open vent is provided for fuel vapor from the reservoir to the tank via the vapor vent line (**46; 46'**); and
said fuel vapor venting means includes an auxiliary pump bypass valve (**34; 34'**) connected in parallel to said auxiliary pump (**30; 30'**).

2. An aircraft as claimed in claim 1, having an engine compartment (**13**) separated from other parts of the aircraft by a fire wall (**11**), and wherein the fuel system is a fuel injection type system (**10**) in which:
the fuel metering unit is a pressurized fuel metering unit (**14**) on the aircraft engine (**12**) and connected to the fuel tank by the fuel line (**26, 38, 40, 42**);
an engine driven pump (**16**) is connected in said line and positioned in the engine compartment (**13**);
a vapor separator (**60**) is connected in said line between the engine driven pump (**16**) and the fuel metering unit (**14**) with a further vapor vent line (**44**) connecting the vapor separator (**60**) to the fuel tank (**18, 19**); and
the fuel reservoir (**28**) is positioned outside the engine compartment (**13**) and is connected in said fuel line between the fuel tank (**18, 19**) and the engine driven pump (**16**).

3. An aircraft as claimed in claim **2**, wherein, in operation, the vapor separator (**60**) is pressurized and includes a float-operated valve (**62**) which is operable to open the associated further vapor vent line (**44**) when sufficient vapor fills the separator.

4. An aircraft as claimed in claim 1, having an engine compartment (**13'**) separated from other parts of the aircraft by a fire wall (**11'**), and wherein the fuel system is a carbureted type fuel system in which:
a carburetor (**56**) is provided on the aircraft engine (**12'**) and connected to the fuel tank (**18', 19'**) by the fuel line (**26', 32', 38'**); and
the fuel reservoir (**28'**) is positioned outside the engine compartment (**13'**) and is connected in said fuel line.

5. An aircraft as claimed in claim **2**, **3** or **4**, wherein the fuel reservoir (**28; 28'**) is positioned in close proximity to the fire wall (**11; 11'**).

6. An aircraft as claimed in any preceding claim, wherein the submerged auxiliary pump (**30; 30'**) is operable to draw fuel from the bottom of the reservoir and discharge the fuel through an outlet line (**32; 32'**) extending out of the reservoir, and wherein the bypass valve (**34; 34'**) is positioned in the reservoir and connects with the outlet line (**32; 32'**) in parallel with the auxiliary pump (**30; 30'**).

7. An aircraft as claimed in claim **6**, wherein the fuel reservoir (**28; 28'**), auxiliary fuel pump (**30; 30'**) and bypass valve (**34; 34'**) constitute an integrated module.

8. An aircraft as claimed in claim **6** or **7**, including a pressure relief valve (**36; 36'**) having an inlet connected to the auxiliary pump outlet line (**32; 32'**), and an outlet opening into the reservoir to vent fuel under pressure from the auxiliary pump (**30; 30'**) into the reservoir (**28; 28'**), the pressure relief valve (**36; 36'**) and bypass valve (**34; 34'**) being mounted within the reservoir.

## Patentansprüche

1. Kolbenangetriebenes Fahrzeug, das ein Treibstoffsystem (10; 10') aufweist und beinhaltet: einen Treibstofftank (18, 19; 18', 19'), ein Treibstoffmessgerät (14; 56), das mit dem Triebwerk (12; 12') verbunden ist, eine Treibstoffleitung (26, 38, 40, 42; 26', 38'), die das Treibstoffmessgerät (14; 56) mit dem Treibstofftank (18, 19; 18', 19') verbindet, und Mittel, die sich in besagter Leitung befinden, die sich zwischen dem Kraftstofftank und dem Messgerät zum Entlüften des Treibstoffgases über eine Gasentlüftungsleitung (46; 46') befindet, wobei die besagten Treibstoffgasentlüftungsmittel einen Treibstoffbehälter (28, 28'), der sich in der besagter Leitung befindet, die sich zwischen dem Treibstofftank und dem Messgerät befindet, und eine Tauchhilfspumpe (30; 30') beinhalten, die sich in dem besagten Behälter befindet, um das Treibstoffsystem des besagten Behälters stromabwärts zu speisen, **dadurch gekennzeichnet, dass** das Fahrzeug ein Flugzeug, der Treibstofftank (18, 19; 18', 19') ein Fallkraftflussstofftank, der sich im Flugzeug befindet, ist, wobei jene Fallkraft Treibstoff zum Behälter (28; 28') über die Treibstoffleitung (26; 26') speist, und dass eine offene Entlüftung für Treibstoffgas vom Behälter zum Tank über die Gasentlüftungsleitung (46; 46') vorgesehen ist, und wobei besagte Treibstoffentlüftungsmittel ein Hilfspumpenrücklaufventil (34; 34') beinhalten, das mit besagter Hilfspumpe (30; 30') parallel verbunden ist.

2. Flugzeug, so wie in Anspruch 1 beansprucht, das einen Triebwerksraum (13) aufweist, der von anderen Teilen des Flugzeugs durch eine Brandmauer (11) abgetrennt ist und wobei das Treibstoffsystem ein Treibstoffeinspritzsystem (10) ist, in dem das Treibstoffmessgerät ein unter Druck gesetztes Treibstoffmessgerät (14) am Flugzeugtriebwerk (12) und durch die Treibstoffleitung (26, 38, 40, 42) mit dem Treibstofftank verbunden ist, wobei eine triebwerksangetriebene Pumpe (16) in besagter Leitung verbunden und im Triebwerkraum (13) positioniert ist, wobei ein Gasabscheider (60), der sich in besagter Leitung befindet, die sich zwischen der triebwerksangetriebenen Pumpe (16) und dem Treibstoffmessgerät (14) befindet, mit einer weiteren Gasentlüftungsleitung (44) verbunden ist, die den Gasabscheider (60) mit dem Treibstofftank (18, 19) verbindet, und wobei der Treibstoffbehälter (28) außerhalb des Triebwerkraums (13) positioniert und in besagter Treibstoffleitung verbunden ist, die sich zwischen dem Treibstofftank (18, 19) und der triebwerksangetriebenen Pumpe (16) befindet.

3. Flugzeug, so wie in Anspruch 2 beansprucht, wobei der Gasabscheider (60) während des Betriebs unter Druck gesetzt wird und ein Schwimmventil (62) beinhaltet, das bedienbar/einsetzbar ist, um die damit verbundene weitere Gasentlüftungsleitung (44) zu öffnen, wenn genug Gas den Abscheider füllt.

4. Flugzeug, so wie in Anspruch 1 beansprucht, das einen Triebwerkraum (13') aufweist, der von anderen Teilen des Flugzeugs durch eine Brandmauer (11') abgetrennt ist, und wobei das Treibstoffsystem ein karburiertes Treibstoffsystem ist, wobei ein Verdampfer (56) am Flugzeugtriebwerk (12') vorgesehen und durch die Treibstoffleitung (26', 32', 38') mit dem Treibstofftank (18', 19') verbunden ist und wobei der Treibstoffbehälter (28') außerhalb des Triebwerkraums (13') positioniert und in besagter Treibstoffleitung verbunden ist.

5. Flugzeug, so wie in Anspruch 2, 3 oder 4 beansprucht, wobei der Treibstoffbehälter (28; 28') ganz in der Nähe der Brandmauer (11; 11') positioniert ist.

6. Flugzeug, so wie in irgendeinem der vorangehenden Ansprüche beansprucht, wobei die Tauchhilfspumpe (30; 30') bedienbar/einsetzbar ist, um Treibstoff vom Boden des Behälters anzusaugen und um den Treibstoff durch eine Ablassleitung (32; 32') auszulassen, die sich aus dem Behälter heraus erstreckt, und wobei das Rücklaufventil (34; 34') im Behälter positioniert ist und mit der Auslassleitung (32; 32') parallel zur Hilfspumpe (30; 30') in Verbindung steht.

7. Flugzeug, so wie in Anspruch 6 beansprucht, wobei der Treibstoffbehälter (28; 28'), die Treibstoffhilfspumpe (30; 30') und das Rücklaufventil (34; 34') ein integriertes Modul darstellen.

8. Flugzeug, so wie in Anspruch 6 oder 7 beansprucht, das ein Überdruckventil (36; 36'), das einen Einlass, der mit der Hilfspumpenauslassleitung (32; 32') verbunden ist, und eine Auslassöffnung in den Behälter hinein beinhaltet, um Treibstoff unter Druck von der Hilfspumpe (30; 30') in den Behälter (28; 28') fließen zu lassen, wobei das Überdruckventil (36; 36') und das Rücklaufventil (34; 34') innerhalb des Behälters befestigt sind.

## Revendications

1. Véhicule à moteur à pistons possédant un système de carburant (10 ; 10') comprenant :
un réservoir de carburant (18, 19 ; 18', 19') ;
une unité de mesure du carburant (14 ; 56) associée au moteur (12 ; 12') ;
une canalisation de carburant (26, 38, 40, 42 ; 26', 38') reliant l'unité de mesure de carburant (14 ; 56) au réservoir de carburant (18, 19 ; 18', 19') ; et
un moyen prévu dans ladite canalisation entre le réservoir de carburant et l'unité de mesure, destiné à purger les vapeurs de carburant, par l'intermédiaire d'une canalisation de purge de vapeurs (46 ; 46'), ledit moyen de purge des vapeurs de carburant comprenant une réserve de carburant (28, 28') prévue dans ladite canalisation entre le réservoir de carburant et l'unité de mesure, et une pompe auxiliaire immergée (30 ; 30') dans ladite réserve, destinée à charger le système de carburant en aval de ladite réserve ; et
**caractérisé en ce que** :
le véhicule est un avion ;
le réservoir de carburant (18, 19 ; 18', 19') est un réservoir de carburant à écoulement par gravité dans l'avion, qui conduit par gravité du carburant jusqu'à la réserve (28 ; 28') par l'intermédiaire de la canalisation de carburant (26 ; 26') ;
un orifice de purge est prévu pour le passage des vapeurs de carburant depuis la réserve jusqu'au réservoir de carburant par l'intermédiaire de la canalisation de purge de vapeurs (46, 46') ; et
ledit moyen de purge des vapeurs de carburant comprend une vanne de dérivation de la pompe auxiliaire (34 ; 34') branchée en parallèle avec ladite pompe auxiliaire (30 ; 30').

2. Avion selon la revendication 1, possédant un compartiment moteur (13) séparé des autres éléments de l'avion par une cloison pare-feu (11), et dans lequel le système de carburant est un système du type à injection de carburant (10) dans lequel :
l'unité de mesure de carburant est une unité de mesure de carburant pressurisée (14) sur le moteur (12) de l'avion, et elle est reliée au réservoir de carburant par la canalisation de carburant (26, 38, 40, 42) ;
une pompe (16) commandée par le moteur est reliée à ladite canalisation et est placée dans le compartiment moteur (13) ;
un séparateur de vapeurs (60) est relié à ladite canalisation entre la pompe (16) commandée par le moteur et l'unité de mesure du carburant (14), au moyen d'une canalisation supplémentaire de purge de vapeurs (44) reliant le séparateur de vapeurs (60) et le réservoir de carburant (18, 19) ; et
la réserve de carburant (28) est placée en dehors du compartiment moteur (13) et est reliée à ladite canalisation de carburant entre le réservoir de carburant (18 , 19) et la pompe (16) commandée par le moteur.

3. Avion selon la revendication 2, dans lequel, en fonctionnement, le séparateur de vapeurs (60) est pressurisé, et comprend une soupape (62) commandée par flotteur qui peut fonctionner pour ouvrir la canalisation supplémentaire de purge de vapeurs (44) associée quand suffisamment de vapeur remplit le séparateur.

4. Avion selon la revendication 1, possédant un compartiment moteur (13') séparé des autres éléments de l'avion par une cloison pare-feu (11'), et dans lequel le système de carburant est un système du type à carburateur dans lequel :
un carburateur (56) est prévu sur le moteur (12') dé l'avion et est relié au réservoir de carburant (18', 19') par la canalisation de carburant (26', 32', 38') ; et
dans lequel la réserve de carburant (28') est placée à l'extérieur du compartiment moteur (13') et est reliée à ladite canalisation de carburant.

5. Avion selon la revendication 2, 3 ou 4, dans lequel la réserve de carburant (28 ; 28') est placée à proximité immédiate de la cloison pare-feu (11 ; 11').

6. Avion selon l'une quelconque des revendications précédentes, dans lequel la pompe auxiliaire immergée (30 ; 30') peut fonctionner de manière à extraire du carburant depuis le fond de la réserve et débiter le carburant par une canalisation de sortie (32 ; 32') s'étendant à l'extérieur de la réserve, et dans lequel la vanne de dérivation (34 ; 34') est placée dans la réserve et est reliée à la canalisation de sortie (32 ; 32'), en parallèle avec la pompe auxiliaire (30 ; 30').

7. Avion selon la revendication 6, dans lequel la réserve de carburant (28 ; 28'), la pompe auxiliaire de carburant (30 ; 30') et la vanne de dérivation (34 ; 34') constituent un module intégré.

8. Avion selon la revendication 6 ou 7, comprenant une soupape de surpression (36 ; 36') ayant une entrée reliée à la canalisation de sortie (32 ; 32') de la pompe auxiliaire, et un orifice de sortie débouchant dans la réserve, destiné à purger le carburant sous pression de la pompe auxiliaire (30 ; 30') dans la réserve (28 ; 28'), la soupape de surpression (36 ; 36') et la vanne de dérivation (34 ; 34') étant montées dans la réserve.
